# EUROPEAN PATENT APPLICATION

(11) **EP 0 920 142 A1**
(43) Date of publication of application: **02.06.1999**
(21) Application number: 97309483.2
(22) Date of filing: 25.11.1997
(51) Int. Cl.: H04B 7/185

(54) **Mobile telephone incomplete network operation**

(71) Applicant: ICO Services Ltd., Hammersmith, London W6 9BN (GB)
(72) Inventor: Grayson, Mark, Chiswick, London, W4 2QT (GB)
(74) Representative: Geary, Stuart Lloyd

(57) **Abstract**

In a mobile telephone network, a mobile station (8) maintains a record of interconnections between network components, for instance between visible cells and switching centres (1a, 1b, 1c, 1d). The record deals with traffic channel and signalling channel interconnections separately.

By virtue of the record, the mobile station (8) can determine whether is should respond to a paging signal in the normal way or re-register with the network.

## Description

The present invention relates to a mobile telephone system.

Various proposals have been made for satellite mobile telephone systems. These include the Inmarsat-M system, the IRIDIUM™ system described in EP-A-0365885, the ICO™ system described in GB-A-2295296 and the ODYSSEY™ system described in EP-A-0510789.

Typically a satellite mobile telephone system will comprise a plurality of satellites orbiting the Earth, a plurality of geographically distributed satellite ground stations and a plurality of mobile stations which can communicate with the satellite ground stations via the satellites. In the system of GB-A-2295296, the satellite ground stations include mobile satellite switching centres and are linked by a terrestrial network. This network can carry both control and speech channels between satellite ground stations. A mobile station need not be registered with the mobile satellite switching centre of the satellite ground station with which it is directly in contact because the speech channel used by the mobile station can be routed via the network to the mobile satellite switching centre at which it is registered.

A problem arises however from the assumption that channel capacity will always be available in the terrestrial network. The necessary channel capacity may not be available for any one of a number of reasons, including incomplete construction of the network, a fault in the network or overloading of the network.

The solution to this problem is to force the re-registration of the mobile station to ensure that it is at least pageable until a call is made.

It will be appreciated that, although the present invention solves a problem arising in a satellite mobile telephone system, the present invention has wider application in the field of mobile telephone systems.

According to the present invention, there is provided a method of operating a mobile station in a mobile telephone system comprising maintaining a record of network interconnection capabilities, and transmitting a registration request signal on the basis of said record.

Advantageously, the record includes information concerning the presence of signalling channel paths between switching centres, and the transmission of a registration request signal is carried out in the event that the information indicates that the mobile station cannot be paged by a switching centre with which it is registered. Thus, the mobile station will always be pageable.

However, although the mobile station can be paged, it may not be in a position to exchange speech signals with the paging node. Preferably, therefore, a method according to the present invention also comprises receiving paging signal, determining whether the paging signal originates from a switching centre to which there is a traffic channel path capability from the mobile station by reference to the record of network interconnection capabilities, and, if there is not a traffic channel path capability, transmitting a registration request signal.

Preferably, the present invention is applied to a mobile telephone system, comprising a mobile station, a plurality of switching centres and communications network linking the switching centres. The method preferably comprises broadcasting to the mobile station information concerning network interconnection capabilities established with reference to the interconnection capabilities between switching centres. However, if the limitations of the communications network are permanent features, the mobile station may be pre-programmed with this information or have it supplied on the mobile station's SIM card if such is used.

The present invention is most preferably applied to a satellite mobile telephone system.

According to the present invention, there is also provided a mobile station for a mobile telephone network comprising means configured to maintain a record of network interconnection capabilities, and processing means configured to cause the mobile station to transmit a registration request signal in dependence on the contents of said record.

Preferably, the processing means is configured to cause the mobile station to transmit a registration request signal in the event that the record indicates that the mobile station cannot be paged by a switching centre with which it is registered.

Preferably, the processing means is configured to cause the mobile station to respond to a paging signal with a registration request if the record indicates that there is not a traffic channel path capability from the mobile station to the source of the paging signal.

A mobile station according to the present invention preferably includes means for extracting network interconnection capability data from network broadcast control signals, wherein the record is maintained on the basis of said extracted data.

A mobile station according to the present invention may be incorporated in a mobile telephone system which has means for broadcasting control signals carrying said network interconnection capability data. The mobile telephone system is preferably a satellite mobile telephone system.

Embodiments of the present invention will now be described, by way of example, with reference to the accompanying drawings, in which:
Figure 1 shows a satellite mobile telephone system;
Figure 2 shows a satellite access node of the system of Figure 1;
Figure 3 shows a mobile station of the system of Figure 1;
Figure 4 is a flow diagram illustrating a process for identifying a set of serving cells;
Figure 5 is a satellite access node interconnectivity table for the network shown in Figure 1;
Figure 6 shows the satellite mobile telephone system of Figure 1 with impaired terrestrial traffic channel support;
Figure 7 is a satellite access node interconnectivity table for the network shown in Figure 6;
Figure 8 shows the satellite mobile telephone system of Figure 1 with impaired terrestrial traffic and signalling channel support; and
Figure 9 is a satellite access node interconnectivity table for the network shown in Figure 8.

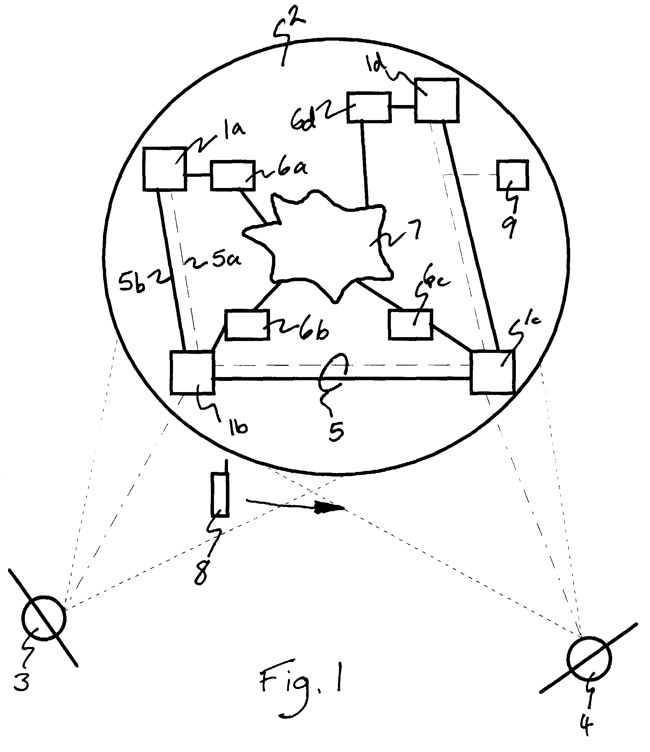

Referring to Figure 1, a completed satellite mobile telephone system comprises a plurality of satellite access nodes 1a, ..., 1d distributed about the surface of the Earth 2, a first satellite 3 in medium Earth orbit, a second satellite 4 in medium Earth orbit and a plurality of further satellites (not shown) also in medium Earth orbit. The satellite access nodes 1a, ..., 1d are linked to each other by a network 5 (hereinafter "the backbone network") which supports signalling 5a and traffic channels 5b. The satellite access nodes 1a, ..., 1d are also linked, via respective gateway mobile satellite switching centres 6a, ..., 6d to the Public Switched Telephone Network 7. A home location register 9 is also connected into the backbone network 5.

The satellites 3, 4 relay signals between respective satellite access nodes 1b, 1c and a plurality of mobile stations 8 (only one shown). For communication with mobile stations 8, each satellite 3, 4 directs a plurality of beams at the Earth's surface. Each beam serves as one cell of the satellite mobile telephone system.

Each satellite access node 1a, ..., 1d transmits control information via the or each satellite 3, 4 to which it has an uplink. Different control information is sent to each cell using a respective broadcast control channel. For each cell, the broadcast control channel carries, amongst other information, the identities of the satellite access nodes 1a, ..., 1d to which there is a signalling link via the backbone network 5 and the identities of the satellite access nodes 1a, ..., 1d to which there is a traffic link via the backbone network 5. With the network as shown in Figure 1, the broadcast control channel of each cell identifies all satellite access nodes 1a, ..., 1d, other than that transmitting the broadcast control channel signal, as being linked for both signalling and traffic via the backbone network 5. The broadcast control channel for each cell also contains a list of neighbouring cells, defined by beams from both the same satellite and other satellites.

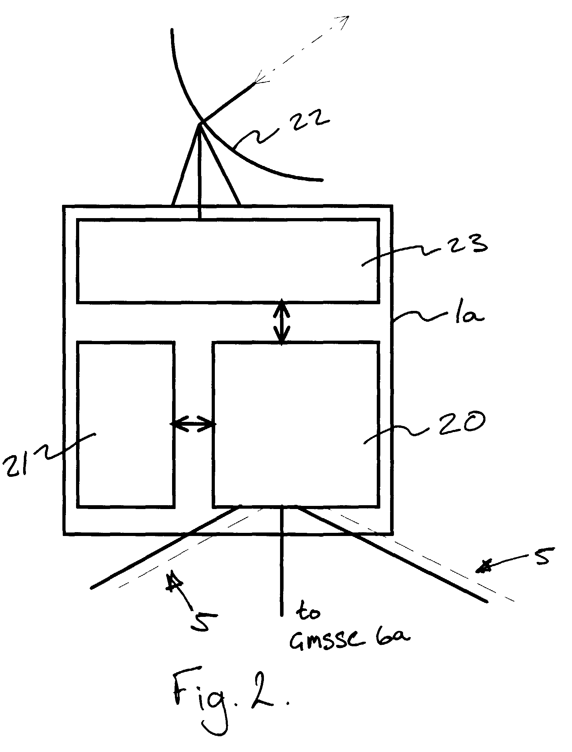

Referring to Figure 2, the first satellite access node 1a comprises a visited mobile satellite switching centre 20, a visitor location register 21 and a satellite base station. The satellite base station consists of an antenna 22 and control and communications subsystems 23. At the satellite access nodes 1, the backbone network 5 is connected to the visited mobile satellite switching centre 20. The visited mobile satellite switching centre 20 is also connected to the respective gateway mobile satellite switching centre 6. The other satellite access nodes 1b, 1c, 1d have the same construction.

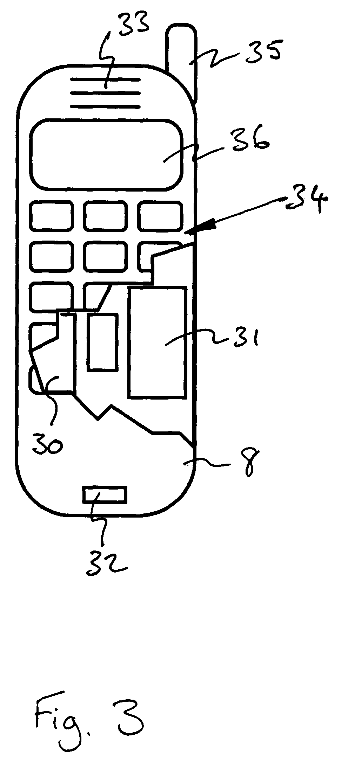

Referring to Figure 3, a mobile station 8 is generally similar to the units presently available for GSM networks and comprises a codec 30, a controller 31, a microphone 32, a loudspeaker 33, a battery, a keypad 34, a radio frequency interface, an antenna 35, a display 36 and subscriber identification module (SIM) smart card.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM includes a processor and a non-volatile memory which stores data identifying the subscriber and data for use in encrypted communication.

The operation of the satellite mobile telephone system of Figure 1 in its complete form will now be described so that the subsequent descriptions of embodiments of the present invention can be more readily understood.

Referring to Figures 1 to 3, when a mobile station 8 is switched on it must first perform a location update with the network. To do this, the mobile station 8 monitors all of the system's broadcast control channels and determines which broadcast control channel is strongest.

The mobile station 8 obtains control information from the strongest broadcast control channel. Assuming that the mobile station 8 is initially in a cell served by the first satellite 3, the mobile station 8 notifies its presence to the control systems of network and the network allocates the visited mobile satellite switching centre 20 of the second satellite access node 1b to the mobile station 8.

The visited mobile satellite switching centre 20 of the second satellite access node 1b sends a message to the home location register 9 via the backbone network 5 informing it that the mobile station 8 is active and giving its own identity. The home location register 9 updates its record for the mobile station 8 with its new active status and the identity of the visited mobile satellite switching centre 20 with which it is registering. The home location register 9 also returns much of its own record for the mobile station 8 via the backbone network 5. The returned data is then stored by the visitor location register 21.

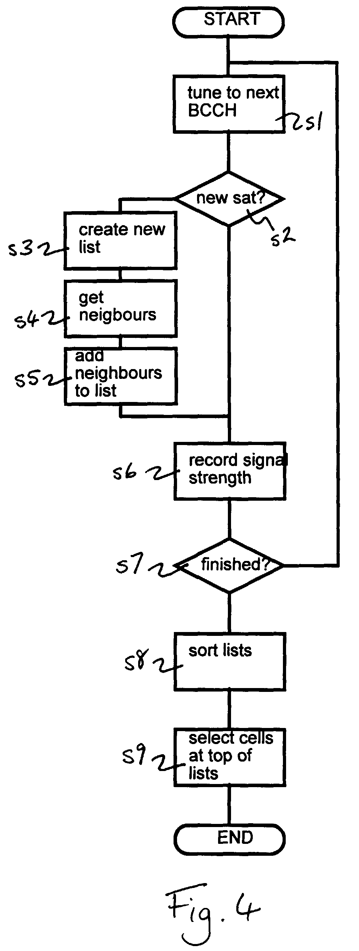

Referring to Figure 4, once registered with the network, the mobile station 8 tunes to and attempts to decode the broadcast control channel transmissions to all of the cells neighbouring its current cell (step s1). If one of these transmissions is from another satellite (step s2), for instance the second satellite 4, the mobile station 8 ensures that there is a cell list for that satellite (step s3). In every case where a transmission is not from the satellite 3 (step s4), through which the mobile station 8 registered, the mobile station 8 also obtains that cell's neighbouring cell list from its broadcast control channel and adds the broadcast control channel's for those cells to its list of broadcast control channels to be tuned to (step s5).

Regardless of whether a new satellite has been detected, the signal strength of the currently tuned broadcast control channel is then recorded against the relevant cells list entry (step s6).

When all of the broadcast control channels have been tuned to (step s7), the mobile station 8 will have built up a neighbouring cell list for each visible satellite. The mobile station 8 ranks the cells in the lists according to received signal strength (step s8). The cells in each list having the greatest signal strengths are then designated as the serving cells (step s9). This process of identifying the serving cells is repeatedly performed to account for relative movement between the satellites 3, 4 and the mobile station 8.

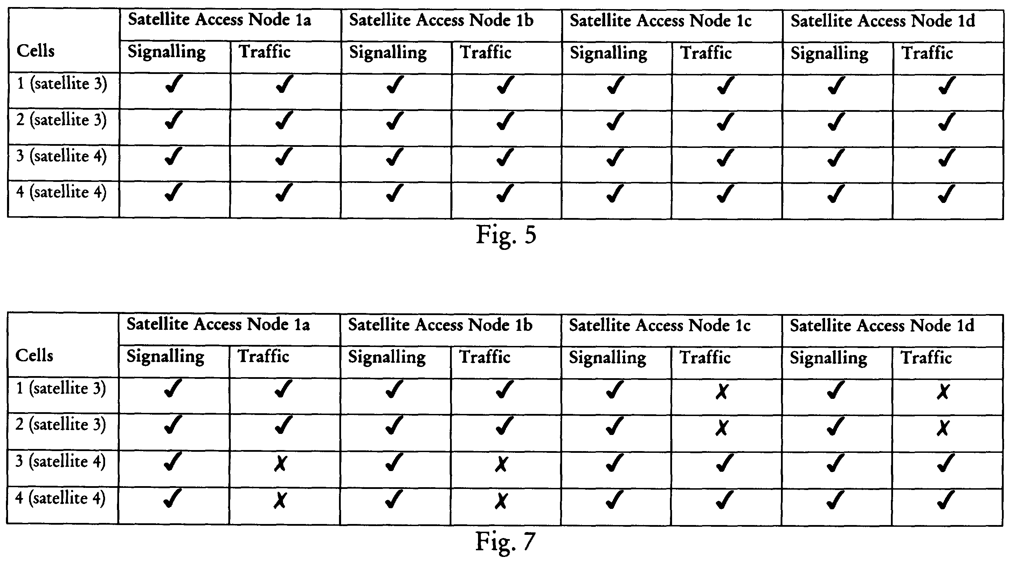

For each of the serving cells, the mobile station 8 decodes the backbone network 5 link information and builds a table summarising this information. In the present case, assuming two cells served by each satellite are visible to the mobile station 8, this table would contain the information shown in Figure 5. The table in Figure 5 shows that backbone network 5 links are available for both signalling 5a and traffic 5b cells serviced by different satellites and the satellite access nodes 1.

The mobile station 8 will periodically repeat the location update process. Whilst the mobile station 8 is active, it may move from a cell of the first satellite 3 to a cell of the second satellite 4. The second satellite 4 communicates with a different satellite access node 1c. However, since the mobile station 8 is already registered with the network, its visitor location register record is not transfered to the visitor location register 21 of the satellite access node 1c for the second satellite 4. Instead, the original visitor location register record is modified to indicate that calls to the mobile station 8 must be routed through the backbone network 5 to the satellite access node 1c for the second satellite 4.

If a call is made to the mobile station 8 from the Public Switched Telephone Network 7, the call is routed to one of the gateway mobile satellite switching centres 6a, ..., 6d. The gateway mobile satellite switching centre 6a, ..., 6d accesses the home location register 9 to obtain the identity of the visited mobile satellite switching centre 20 with which the mobile station 8 is registered. Assuming that the mobile station 8 is registered with the network, the home location register 9 returns the identity of the visited mobile satellite switching centre 20 with which the mobile station 8 is registered. The gateway mobile satellite switching centre 6a, ..., 6d then routes the call to the visited mobile satellite switching centre 20 with which the mobile station 8 is registered. If the mobile station 8 is still within the ambit of the first satellite 3, the visited mobile satellite switching centre 20 pages the mobile station 8 via the first satellite 3. If the mobile station 8 responds correctly, the call is then connected. If, on the otherhand, the mobile station 8 has moved to a cell of the second satellite 4, the visited mobile satellite switching centre 20 routes a paging signal via the signalling part 5a of the backbone network 5 to the visited mobile satellite switching centre 20 of the satellite access node 1c for the second satellite. This visited mobile satellite switching centre 20 then pages the mobile station 8 via the second satellite 4. If the mobile station 8 responds correctly to the page, the call is connected and the speech of the parties to the call are routed between the two visited mobile satellite switching centres 20 using a traffic channel 5b of the backbone network 5.

Referring to Figure 6, the configuration of the network is the same as described above with reference to Figure 1 except that the traffic channel capability of the backbone network 5 is impaired between the satellite access nodes 1b, 1c for the first and second satellites 3, 4. The impairment may comprise the lack of a physical connection, for instance in the case of a partially constructed system or a fault. However, the impairment may be the lack of free traffic capacity.

The mobile station 8 registers with the network as described above. However, the table summarising the links between cells and satellite access nodes is now as shown in Figure 7.

The situation where the mobile station 8 has moved to a cell of the second satellite 4 and cannot detect the broadcast control channel for any of the cells of the first satellite 3 will now be considered. In this case, there will be only one serving cell and the link table will show that there is no traffic link between the mobile station's current cell and the satellite access node 1b where the mobile station 8 is registered.

If a call is to be made from the mobile station 8, it must be routed via the satellite access node 1b where the mobile station 8 is registered. However, the mobile station 8 and the network control system know that there is no backbone network traffic capacity between the satellite access node 1c for the second satellite 4 and the satellite access node 1b where it is registered. This being the case, the mobile station 8 performs a location update and the network control system ensures that it registers with the satellite access node 1c for the second satellite 4. This location update results in the visitor location register record for the mobile station 8 being transferred to the visited mobile satellite switching centre of the satellite access node 1 of the second satellite 4. Once the location update is complete, the call can be made.

It should be noted that a mobile terminated short message service call can be completed satisfactorily using only signalling channels.

If a mobile terminated call is made from the Public Switched Telephone Network 7, it is routed to the visited mobile satellite switching centre 20 at which the mobile station 8 is registered. The visited mobile satellite switching centre 20 sends a paging signal via signalling capacity 5a of the backbone network 5 to the satellite access node 1c of the second satellite 4. This satellite access node 1c broadcasts the paging signal to the cells where the mobile station 8 is likely to be. The mobile station 8 detects the paging signal. However, it knows from the link table that there is no possibility of the call being successfully connected. Therefore, instead of replying to the paging signal, the mobile station 8 performs a location update to register with the visited mobile satellite switching centre 20 of the satellite access node 1c of the second satellite 4. The network control system is aware of the gap in traffic channel capability and the mobile station 8 is actually registered at the visited mobile satellite switching centre 20, rather than merely having the extant visitor location register record modified. The visited mobile satellite switching centre 20 through which the call was routed, determines that the mobile station 8 is not accessible and terminates the call just as if the mobile station 8 had not be switched on.

In another embodiment, the visited mobile satellite switching centre 20, where the mobile station 8 is registered, knows that there is no traffic capacity between the satellite access nodes 1b, 1c and instead of terminating the call as if the mobile station 8 were not switched on, it terminates the call with a message to the calling party inviting them to try again. If the mobile station 8 is indeed active, the re-registration at the satellite access node 1c of the second satellite will enable a subsequent call to be connected.

If a call is made from the Public Switched Telephone Network 7 via a gateway mobile satellite switching centre 6a, ..., 6d with no traffic channel link through the backbone network 5 to the called mobile station's visited mobile satellite switching centre 20, the gap in the backbone network 5 is by-passed by routing the call back through the Public Switched Telephone Network 7 to another gateway mobile satellite switching centre 6a, ..., 6d, from which there is a traffic channel link to the mobile station's visited mobile satellite switching centre 20 via the backbone network.

In the foregoing, the absence of a traffice channel link between two satellite access nodes has been considered. The case of a complete break in the backbone network will now be considered.

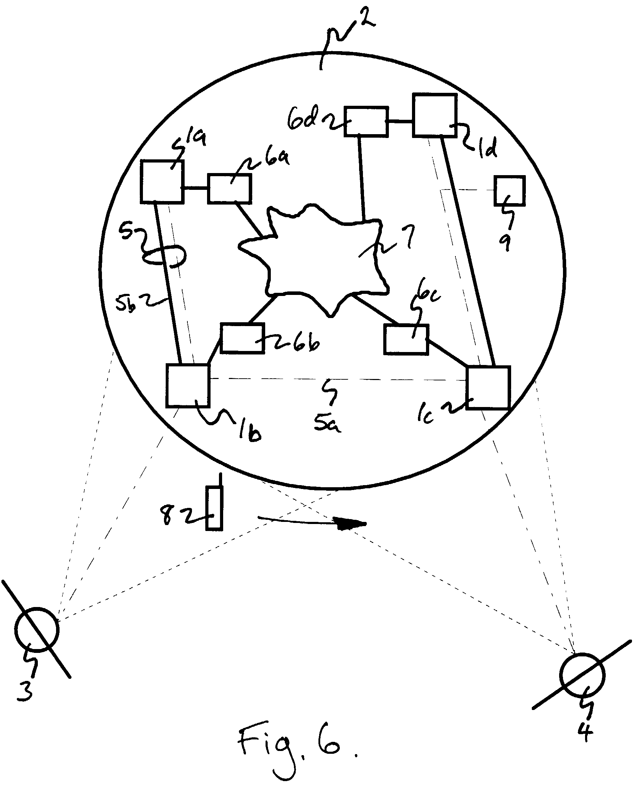

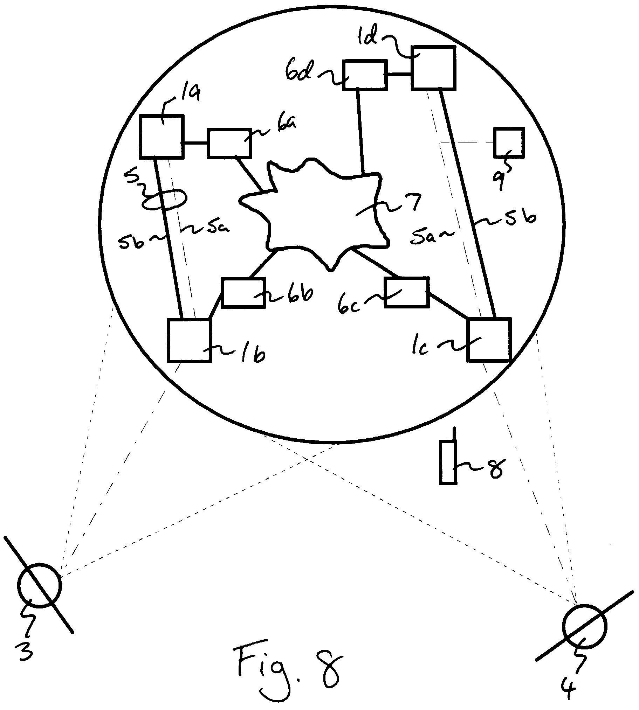

Referring to Figure 8, a satellite mobile telephone system is the same as that shown in Figure 1 except that the backbone network 5 is broken between the second and third satellite access nodes 1b, 1c.

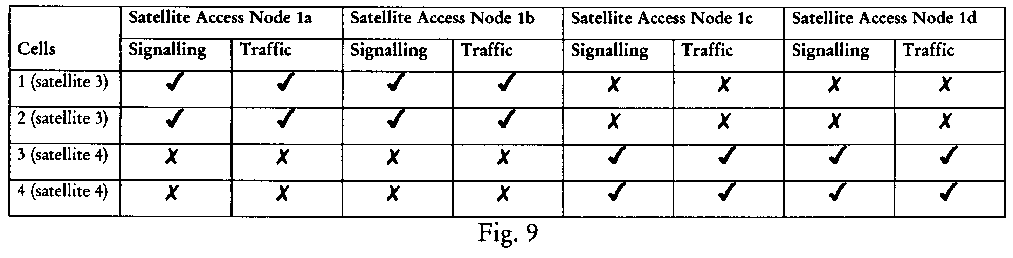

With the mobile station 8 initially registed with the visited mobile satellite switching centre of the second satellite access node 1b, the mobile station 8 will build up the table shown in Figure 9 as it passes through the region covered by both the first satellite 3 and the second satellite 4.

As the mobile station 8 moves into the region solely covered by the second satellite 4, it determines from the stored table that it can no longer be paged from the visited mobile satellite switching centre 20 at the second satellite access node 1b. Consequently, the mobile station 8 performs a location update with the network. The network control system determines that no backbone network link exists between the mobile station 8 and the visited mobile satellite switching centre where it is currently registered and ensures that the location update results in the mobile station 8 being registered at the visited mobile satellite switching centre 20 of the third satellite access node 1c.

It will be appreciated that the location updates described above are in addition to those normally performed, for instance at predetermined intervals.

## Claims

1. A method of operating a mobile station in a mobile telephone system comprising maintaining a record of network interconnection capabilities, and transmitting a registration request signal on the basis of said record.

2. A method according to claim 1, wherein said record includes information indicative of the presence of signalling channel paths between switching centres of the system, and said transmission of a registration request signal is carried out in the event that said information indicates that the mobile station cannot be paged by a switching centre with which it is registered.

3. A method according to claim 1 or 2, comprising receiving a paging signal, determining whether the paging signal originates from a switching centre to which there is a traffic channel path capability from the mobile station by reference to the record of network interconnection capabilities, and, if there is not a traffic channel path capability, transmitting a registration request signal.

4. A method of operating a mobile telephone system, comprising a mobile station, a plurality of switching centres and communications network linking the switching centres, the method comprising broadcasting to the mobile station information concerning network interconnection capabilities established with reference to the interconnection capabilities between switching centres.

5. A method according to claim 4, comprising a method according to any one of claims 1 to 3, wherein the record of network interconnection capabilities is maintained on the basis of said broadcast information.

6. A method of operating a satellite mobile telephone system according to claim 4 or 5.

7. A mobile station for a mobile telephone network comprising means configured to maintain a record of network interconnection capabilities, and processing means configured to cause the mobile station to transmit a registration request signal in dependence on the contents of said record.

8. A mobile station according to claim 7, wherein the processing means is configured to cause the mobile station to transmit a registration request signal in the event that said record indicates that the mobile station cannot be paged by a switching centre with which it is registered.

9. A mobile station according to claim 7 or 8, where in the processing means is configured to cause the mobile station to respond to a paging signal with a registration request if said record indicates that there is not a traffic channel path capability from the mobile station to the source of the paging signal.

10. A mobile station according to claim 7, 8 or 9, including means for extracting network interconnection capability data from network broadcast control signals, wherein said record is maintained on the basis of said extracted data.

11. A mobile telephone system comprising a mobile station according any one of claims 7 to 10 and means for broadcasting control signals carrying said network interconnection capability data.

12. A satellite mobile telephone system according to claim 11.
